# NEUE EUROPÄISCHE PATENTSCHRIFT

(11) **EP 2 607 224 B2**
(45) Veröffentlichungstag und Bekanntmachung des Hinweises auf die Entscheidung über den Einspruch: **22.08.2018**
(45) Hinweis auf die Patenterteilung: 07.05.2014
(21) Anmeldenummer: 11010174.8
(22) Anmeldetag: 23.12.2011
(51) Int. Cl.: B63B 25/00, B63B 25/12, F02M 21/02, B63H 21/20, B63H 21/38, B63B 17/00

(54) **Schwimmkörper, insbesondere Containerschiff**
Buoyant body, in particularly container ship
Corps flottant, en particulier porte conteneurs

(43) Veröffentlichungstag der Anmeldung: 26.06.2013
(73) Patentinhaber: Technolog GmbH Handels- und Beteiligungsgesellschaft für Technologie, 20459 Hamburg (DE)
(72) Erfinder: Radebold, Helmut, 25379 Herzhorn (DE); Pruin, Berend, 21423 Winsen (DE)
(74) Vertreter: Wunderlich & Heim Patentanwälte Partnerschaftsgesellschaft mbB

(56) Entgegenhaltungen:
- EP-A1- 2 228 294
- EP-A2- 2 374 710
- DE-A1- 4 310 692
- US-A- 3 672 320
- Schmidt-Luessmann, Dr. Jochen, "LNG Fuel ISO Tank Container", Gasfuelled Ships 2011 Conference, 26 Oktober 2011, Titelseite und Seiten 117-126 (Kopie aus dem auf den Konferenz verteilten Handbook)

## Beschreibung

Die Erfindung betrifft einen Schwimmkörper mit mindestens einem Kraftstoffcontainer-Ladebereich mit Kraftstoffcontainer, gemäß Oberbegriff des Anspruchs 1. Kraftstoffcontainer können hierbei für Verbrauchskraftstoffe wie LNG (Liquid Natural Gas) oder LPG (Liquid Petroleum Gas) für Motoren und Hilfsaggregate an Bord des Schwimmkörpers, insbesondere für Dual-Fuel-Maschinen, vorgesehen sein.

Ein Containerschiff mit einem Konzept für LNG-Motoren ist in der Zeitschrift "Schiff & Hafen", November 2010, Nr. 11, S. 56 angesprochen. Es wird dort erwähnt, dass Motoren für einen Duel-Fuel-Betrieb umgerüstet werden und als Kraftststoff Flüssiggas LNG in Containern an Deck transportiert und gelagert werden sollen. Dieses Konzept geht jedoch nicht auf Sicherheitsaspekte ein, die insbesondere bei Kraftstoffcontainern, speziell bei auswechselbaren Kraftstoffcontainern, mit Flüssiggas beachtet werden müssen.

Dual-Fuel-Maschinen und gas-betriebene Maschinen sind hinreichend bekannt. Es wird hierzu beispielsweise auf den Artikel "MAN Dieselfacts, 3/2010 (African Contract Continuals Dual Fuel Global Success) hingewiesen.

In vergleichbarer Weise betrifft auch die Veröffentlichung "MAN Dual-Fuel-Engines for Powerships" (The daily Engineer, 2010-03-11) den Einsatz von Dual-Fuel-Maschinen an Bord von energieerzeugenden Schiffen, sogenannten "Powerships".

Auch in der Patentliteratur sind Dual-Fuel-Maschinen bereits beschrieben und patentiert. Exemplarisch wird hierzu auf US 5,711,270, US 3,766,734 oder US 2002/0002967 A1 hingewiesen.

Unter Dual-Fuel-Maschinen werden in diesem Sinne Motoren und Antriebsanlagen verstanden, die mit mindestens zwei unterschiedlichen Kraftstoffen betrieben werden können. Gas-Motoren sind Motoren, die ausschließlich mit Gasen betrieben werden.

Bei LNG-Transportschiffen hat man bereits frühzeitig Dual-Fuel-Maschinen eingesetzt, um in bestimmten Situationen und Fahrtbereichen die Hauptantriebsmaschine nicht mit Schweröl oder Diesel fahren zu müssen, sondern in speziellen Fällen auch das transportierte Gas als Antriebskraftstoff nutzen zu können. Die erforderlichen Umwandlungsstufen stellen hierbei keine Probleme dar. Beispielsweise wird hierzu auf US 3,766,734 hingewiesen.

Nationale und internationale Vorschriften und Auflagen veranlassen daher Schiffsreeder dazu, immer häufiger Dual-Fuel-Maschinen einzusetzen, so dass insbesondere beim Einsatz auf Schiffen zum Beispiel vom Kraftstoff Schweröl oder Diesel auf umweltfreundliche Kraftstoffe wie LNG oder LPG umgeschaltet werden kann.

Auf diese Weise ist es möglich, strengere Umweltauflagen im Bereich von Küsten und Häfen zu erfüllen, indem die entsprechenden Dual-Fuel-Maschinen auf schadstoffarmes Flüssiggas umgestellt werden.

Ein Schiff als Frachtschiff, Bulk-Carrier, Containerschiff oder dergleichen ist in der EP 2 374 710 A2 beschrieben und weist einen Dual-Fuel-Antrieb zum Beispiel für LNG oder LPG auf. Für diese zweierlei Kraftstoffe sind einerseits Kraftstofftanks und andererseits auch ein LNG-Tank vorgesehen, der zum Beispiel auf Deck angeordnet sein kann. Eine stationäre Anordnung eines derartigen LNG-Tanks wird im Hinblick auf die Raumausnutzung unter Deck im Schiffskörper bevorzugt.

In ähnlicher Weise wird in der DE 43 10 692 A1 der Raum innerhalb eines Containerschiffs noch effizienter genutzt, indem man den beziehungsweise die Kraftstofftanks im entsprechenden Rastermaß unterhalb eines Kranes oder eines Ladegeschirrs des Schiffes fest montiert.

Aus der US 3,672,320 ist ein Tankschiff bekannt, das containerartige Behältnisse aufweist, welche für die Aufnahme und den Transport von Öl vorgesehen sind. Diese containerartigen Behältnisse können am Entladekai als Ganzes und als Einheit aus dem Tankschiff entladen werden. Es bedarf daher keines zeitaufwändigen Pumpens des Öls aus dem Tankschiff, sondern der Entladevorgang kann durch das rasche Beund Entladen der containerartigen Behältnisse erheblich schneller durchgeführt werden.

In der EP 2 228 294 A1 ist ein Schiff beziehungsweise Schwimmkörper offenbart, der auf Deck mehrere Tiefkühlcontainer zum Transport von Flüssiggas, zum Beispiel LNG, aufweist. Bei diesem Schiff möchte man vermeiden, dass die Tankcontainer mit Flüssiggas am Bestimmungskai zum Beispiel mittels eines Krans auf Lastwagen umgeladen werden müssen, um zu speziellen Einrichtungen zur weiteren Nutzung des Flüssiggases befördert zu werden.

Das Schiff gemäß dieser Druckschrift weist daher tiefgekühlte Container mit zum Beispiel LNG auf und entsprechende Einrichtungen wie Kompressoren oder Pumpen zum Beladen und Entladen von LNG, so dass eine direkte Abgabe des Flüssiggases LNG über Leitungen von Bord des Schiffes an Land vorgesehen ist.

Zusätzlich sind auch neben Umweltauflagen nationale und internationale Transportund Sicherheitsvorschriften bei an Deck eines Schiffes mitgeführten Kraftstoffcontainern mit Flüssiggas zu beachten.

Der Erfindung liegt daher die **Aufgabe** zugrunde, einen Schwimmkörper, insbesondere ein Containerschiff so auszustatten, dass entsprechend den Erfordernissen auch umweltfreundlicher Kraftstoff für energieerzeugende Schiffsaggregate eingesetzt werden kann und die Verfügbarkeit derartiger Kraftstoffe auch in Fahrtgebieten von Schiffen gewährleistet ist, in denen die Infrastruktur der Schiffsversorgung im Vergleich zu Industriebereichen noch nicht so entwickelt ist, wobei die entsprechenden Transport- und Sicherheitsvorschriften mit zu beachten sind.

Diese Aufgabe wird bei einem Schwimmkörper durch die Merkmale des Anspruchs 1 gelöst.

Vorteilhafte Weiterbildungen sind in den Unteransprüchen und der Beschreibung aufgenommen.

Ein wesentlicher Gedanke der Erfindung kann darin gesehen werden, Schwimmkörper, Schiffe und insbesondere Containerschiffe auch nachrüstbar mit mobilen oder fest im Freien installierten Kraftstoffcontainern mit eigenem Verbrauchskraftstoff wie LNG oder LPG ausstatten zu können und hierbei auch bei einer Nachrüstung des entsprechenden Schiffes Umweltschutzauflagen und Transport- und Sicherheitsvorschriften berücksichtigen zu können. Es wird daher vorgesehen, entsprechende Kraftstoffcontainer in einem nach oben offenen Ladebereich mit einer weitgehend geschlossenen Umhausung in den Phasen von Transport und Nutzung platzieren zu können, wobei die Kraftstoffcontainer mit einer Andockstation im Nahbereich zur Abgabe von Kraftstoff in das Bordnetz oder die Bordsysteme des Schwimmkörpers koppelbar sind.

Ein weiterer Schwerpunkt kann bei der Erfindung darin gesehen werden, eine flexible Kraftstoffbereitstellung in Behältern beziehungsweise Containern mit der Übernahme an Bord von Schwimmkörpern zu schaffen, um eine erweiterte Kapazität an entsprechendem Kraftstoff zu bieten und auch Reservekapazitäten zu ermöglichen, wobei Transport- und Sicherheitsauflagen berücksichtigt werden können.

Die entsprechenden Kraftstoffcontainer werden in diesem Sinn mindestens temporär und separat vom normalen Frachtbereich des Schiffes fest mit dem Schiff fixiert angeordnet. Hinzu tritt, dass der entsprechende Ladebereich nach oben offen ist und bevorzugterweise im Bereich eines Wetterdecks oder Hauptdecks vorgesehen wird. Im Hinblick auf Sicherheit und Brandschutz wird eine weitgehend geschlossene Umhausung vorgesehen. Diese Umhausung stellt auch einen Leckageschutz gegen eventuell austretendes Flüssiggas dar und wird insbesondere entsprechend der Materialwahl so ausgelegt, dass mindestens das Erfordernis der Brandklasse A60 erreicht wird.

Hierfür eignen sich spezielle Stahlplatten, gegebenenfalls doppelwandig, mit oder ohne innere Isolation.

Die Kraftstoffcontainer und deren Umhausung werden bevorzugt mittschiffs im Bereich der Schiffsaufbauten mit kurzer Verbindung zu den Bordsystemen beziehungsweise zum Bordnetz des Schwimmkörpers vorgesehen. Speziell hierfür ist eine Andockstation zur Koppelung der Kraftstoffcontainer mit Versorgungsleitungen des Schwimmkörpers vorteilhaft.

Im Hinblick auf Leckagedichtheit wird auch die Andockstation mit in die Umhausung eingeschlossen. Hierbei kann eine vollständige, nach oben offene Umfassung berücksichtigt werden, oder im Falle, dass Leckagesicherheit und Brand- beziehungsweise Explosionssicherheit in der Andockstation selbst realisiert sind, kann die Andockstation Teil der Umhausung sein.

Speziell auf Containerschiffen wird zur Überschwenkbarkeit von Frachtcontainern oberhalb des Ladebereichs der Kraftstoffcontainer ein oberer Abdeckschutz über dem offenen Bereich der Umhausung geschaffen. Dieser Abdeckschutz kann zweckmäßigerweise in Art flacher Abdeckplatten wie bei Ladeluken oder flachen Abdeckbehältnissen bestehen, die auch die Grundrissfläche von Containern haben können und an entsprechende Zellenführungen angepasst sind.

Auch eine verschiebbare Plattenanordnung wie bei Ladeluken ist möglich.

Aufgrund dieses sicherheitstechnisch vorgesehenen Abdeckschutzes oberhalb der Umhausung ist auch die Überfahrbarkeit dieses Bereiches mit Frachtcontainern oder anderer Lasten beim Be- oder Entladen gewährleistet.

Hinzu tritt bei der Anordnung der Kraftstoffcontainer im Mittschiffsbereich und Nahbereich der Schiffsaufbauten ein ergänzender Schutz zu beiden Schiffsseiten und in Längsrichtung des Schiffes durch entsprechende Frachtcontainer.

Der Ladebereich für Kraftstoffcontainer weist in der Regel Zellenführungen für die standardisierten Containerabmessungen auf, so dass durch die Anordnung und Stapelung mehrerer Kraftstoffcontainer übereinander, sowohl dadurch bereits eine horizontale, aber auch vertikale fixierte Verbindung mit dem Schwimmkörper erreicht wird. Ergänzend können Zusatzsicherungen oder Abhebesicherungen für die Kraftstoffcontainer innerhalb der Umhausung hinzutreten. Anstelle von Zellenführungen können auch andere geeignete Positionierungs- und/oder Sicherungselemente zur Anwendung kommen.

Die innerhalb von Containerrahmen beziehungsweise Containergestellen fest angeordneten Kraftstoffcontainer haben auf diese Weise standardisierte Containerabmessungen im Außenbereich, so dass sie vergleichbar mit Frachtcontainern bei Transportvorgängen, Be- oder Entladen eines Schiffes, gehandhabt werden können.

Zur einfachen Koppelbarkeit zwischen Kraftstoffcontainer und Andockstation können die entsprechenden Kupplungen von Leitungen für Kraftstoffe, Flüssigkeiten oder Dämpfe als Schnellverschlüsse und flexibel ausgelegt sein. Eine Flexibilität ist bei diesen Leitungen erwünscht, da zwischen dem Schiffskörper und den Kraftstoffcontainern, auch wenn diese fixiert sind, bei schwerer See doch Bewegungen der einzelnen Massen auftreten können, die eine flexible Leitungsverbindung zwischen Andockstation und Kraftstoffcontainer erforderlich machen. Diese Flexibilität kann insbesondere über flexible Schläuche oder Rohre mit Dehnungskompensatoren, zum Beispiel meanderförmige Rohrleitungen, erreicht werden.

Aus Brand- und Explosionsschutzgründen können den Kraftstoffcontainern auch Kühleinrichtungen, insbesondere Berieselungseinrichtungen, zugeordnet sein. Auf diese Weise können beispielsweise die Außentemperaturen der Kraftstoffcontainer und dementsprechend auch die Innentemperatur von Flüssiggas auf sicherheitstechnische Temperaturen gekühlt werden.

Im Hinblick auf Fahrtgebiet und Einsatzzweck eines entsprechenden Schiffes kann es vorteilhaft sein, Kraftstoffcontainer auch mehrseitig, insbesondere beidseitig, einer quer zur Schiffslängsrichtung angeordneten Andockstation zu platzieren. Die entsprechende Umhausung kann dabei den gesamten Bereich der Kraftstoffcontainer einschließlich Andockstation umfassen oder einzelne Bereiche von Kraftstoffcontainern, insbesondere als gestapelte oder gestaffelte Pakete, umfassen.

Bei tiefer gelegtem Ladebereich der Kraftstoffcontainer, zum Beispiel etwas unterhalb des Hauptdecks, kann die Umhausung auch geeigneterweise als Kofferdamm ausgebildet sein. Auch hierbei ist primär dieser Ladebereich nach oben offen.

Ein Austritt von Gasen aus dem Bereich der Kraftstoffcontainer wird üblicherweise außerhalb entsprechender Gefahrenzonenbereiche des Schiffes an die offene Atmosphäre, zum Beispiel nach oberhalb der Schiffsaufbauten abgeleitet.

Der Ladebereich für Kraftstoffcontainer, insbesondere die entsprechenden Zellenführungen oder Container-Positionierungen entsprechen standardisierten Containerabmessungen, so dass unter wirtschaftlichen Gesichtspunkten Leerplätze von Kraftstoffcontainern auch mit normalen Frachtcontainern belegt werden können.

Auch bei Schiffen, die unter Deck stationäre Tanks für Flüssiggas aufweisen, bietet die Erfindung mit zusätzlichen mobilen Kraftstoffcontainern an Deck erhebliche Vorteile. So können diese mobilen Kraftstoffcontainer für LNG oder LPG auf Fahrtrouten des Schiffes mitgeführt werden, die in Häfen mit weniger guter Kraftstoffversorgung führen, so dass ein externes Nachbunkern vermieden werden kann. Auch der Aktionsradius entsprechender Schiffe kann durch Kraftstoffcontainer effektvoll und nachhaltig erweitert werden. Andererseits ist eine Nachversorgung von Kraftstoff an beliebigen Orten mit geeigneten schiffseigenen oder schiffsfremden Be- und Entladevorrichtungen möglich; dies insbesondere zur logistischen Versorgung des Schwimmkörpers in unterschiedlichen geographischen Positionen.

Obwohl Standardmaße der Kraftstoffcontainer vorgesehen werden, können auch andere beliebige Abmessungen von Behältnissen für LNG oder LPG an Bord des entsprechenden Schiffes fixiert und transportiert werden. Auch dies erfolgt innerhalb der geschlossenen Umhausung des vorgesehenen Ladebereichs.

Zweckmäßigerweise ist der Ladebereich für mobile Kraftstoffcontainer im Außenbereich, zum Beispiel auf dem Hauptdeck oder einem Wetterdeck vorgesehen und/oder in der Nähe des Maschinenraumes. Auf diese Weise können relativ kurze Leitungswege zu den entsprechenden Maschinen wie Antriebsmotoren oder Hilfsaggregate erreicht werden.

Bei Schiffsneubauten oder bei Containerschiffen oder auch anderen dafür geeigneten Schwimmkörpern sollte eine Umrüstung beziehungsweise Nachrüstung für die Aufnahme von Kraftstoffcontainern, insbesondere für Flüssiggas, ohne größere Umbauten am und im Schwimmkörper oder Schiff möglich sein. Dabei bleibt es unbenommen, ob das Schiff bereits über feste oder lose Tanks für Flüssiggas oder Kraftstoffe anderer Art verfügt.

Die Ummantelung des Ladebereichs der entsprechenden Kraftstoffcontainer, zum Beispiel mit LNG, mittels einer nach oben offenen Umhausung, erlaubt es, bei Unfällen im Sinne von Lecks, Explosionsgefahren oder dergleichen, derartige Gefahren leichter verhindern oder bekämpfen zu können, so dass Verletzungen von Personen oder Beschädigungen am Schiff in Grenzen gehalten werden können. Die Kraftstoffcontainer können zweckmäßigerweise auch als Pakete sowohl in horizontaler Anordnung als auch in vertikaler Anordnung zusammengefasst werden. Hierdurch lässt sich auch die Länge von Anschlussleitungen zu der entsprechenden Andockstation relativ kurz halten.

Die Anordnung der Kraftstoffcontainer kann auch wettergeschützt, aber auch explosionsgeschützt, mit entsprechenden Schutz- und Druckwänden gegen benachbarte Container und dem weiteren Schiffsbereich ausgelegt sein.

Zwar wird eine mittlere Anordnung des Ladebereichs für die entsprechenden Kraftstoffcontainer in der Nähe eines Maschinenschachtes im Hinblick auf einen ersten Schutz und kurze Leitungswege bevorzugt.

Es kann aber auch eine asymmetrische Anordnung von Kraftstoffcontainern beziehungsweise Kraftstoffbehältern nur auf einer Schiffsseite vorgesehen werden, da abhängig von der Ladungsseite für Frachtcontainer und/oder andere Lasten der Ladebereich der Kraftstoffcontainer nicht überschwenkt werden muss und andererseits die Kraftstoffcontainer selbst rasch an Bord verstaut werden können.

Die Höhe von seitlich gestapelten Frachtcontainern überragt oftmals die Höhe der mittig gestapelten Kraftstoffcontainer. In geeigneter Weise wird dies auch im Hinblick auf die in Längsrichtung des Schiffes platzierten Frachtcontainer berücksichtigt, da hierdurch bereits eine Art Schutzwand für die Kraftstoffcontainer geschaffen wird.

Der offene, beziehungsweise leicht zu öffnende Ladebereich für Kraftstoffcontainer kann als eine erste räumliche Maßnahme zur Eingrenzung von möglichen Schiffsschäden im Falle von Feuer oder einer Explosionsgefahr angesehen werden. Ebenfalls können Berieselungssysteme mit Löschmitteln wie Wasser oder Gas oder Druckmittelsystemen für Schaumstoff oder feuererstickende Gase zweckmäßigerweise eingesetzt werden.

Der Ladebereich der Kraftstoffcontainer kann mittels eines bordeigenen Kranes bedienbar sein. Auf diese Weise ist das Stauen eines oder mehrerer Kraftstoffcontainer auch in Häfen ohne Container-Brücken oder bei einem Versorgungstransport mittels eines Feeder-Schiffes möglich.

Die Kraftstoffcontainer, die vorzugsweise innerhalb eines Container-Führungs- oder Trag-Rahmens mit horizontalen und vertikalen Verstrebungen fest platziert sind, bedürfen einer speziellen Fixierung an Bord des Schiffes.

Nicht ausreichend ist hierbei das bekannte Verspannen bei Frachtcontainern mittels sogenannter Twistblocks, Trossen oder Gestängen gegeneinander oder über Kreuz, auch gegen ein Schiffsteil.

Die Kraftstoffcontainer müssen vielmehr über starre, formschlüssige Befestigungen, gegebenenfalls direkt mit dem Schiffskörper befestigt werden. Dies kann zum Beispiel durch Schraubverbindungen, Verkeilungen oder automatisch oder halbautomatisch wirkende Schnellverbindungen mit entsprechenden Verriegelungseinrichtungen realisiert werden.

Eine geeignete Fixierungseinrichtung ist hierbei auch ein in den Eckbereichen eines Kraftstoffcontainers vorgesehenes umgekehrtes T-Profil, welches in eine etwa komplementär ausgelegte Schuhkonstruktion eingeführt und verriegelt wird.

Geeigneterweise kann die Andockstation für die Kraftstoffcontainer Bestandteil von Schiffsaufbauten oder des Deckhauses sein, so dass schiffsinterne Leitungsverbindungen zu Antriebsmotor oder Hilfsaggregaten genutzt werden können.

Die Andockstation kann aber auch als Baugruppe vorgefertigt sein und an Deck so fest oder demontierbar installiert werden, dass beidseitig die Anordnung beziehungsweise Stapelung von Kraftstoffcontainern möglich ist.

In vorteilhafter Weise kann die Andockstation auch so ausgelegt sein, dass entsprechende Gas-Aufbereitungs- und -Verteilungseinrichtungen darin vorgesehen sind. Weiterhin können in solchen Andockstationen auch die sonst üblichen und erforderlichen Bunkeranschlüsse für alle Treibstoff- und Verbrauchsstoffe integriert sein. Neben Mess- und Steuereinrichtungen, die von den jeweiligen Kraftstoffcontainern zur Andockstation vorgesehen sind, kann das Überleitungssystem, insbesondere für LNG oder LPG, Druckreduzierungseinrichtungen aufweisen, die in der Andockstation vorgesehen sind oder in nahe gelegenen Schiffsräumen vorhanden sind.

Die Erfindung wird nachfolgend anhand schematischer Zeichnungen noch beispielhaft erläutert. Hierbei zeigen:
- Fig. 1: eine schematische seitliche Teilansicht eines Containerschiffes mit zum Heck gerichteten Bereich hinter einem Schiffsaufbau, oberhalb des Haupt- beziehungsweise Wetterdecks;
- Fig. 2: eine schematische Draufsicht auf die Anordnung von Frachtcontainern und Kraftstoffcontainern hinter einem Schiffsaufbau, in ähnlicher Weise wie nach Fig. 1;
- Fig. 3: eine prinzipielle Seitenansicht, etwa im Bereich der Mittschiffslinie mit Kraftstoffcontainern und einer dafür vorgesehenen Umhausung, vergleichbar der Ansicht nach Fig. 1;
- Fig. 4: eine prinzipielle Draufsicht längs der Linie IV-IV nach Fig. 3;
- Fig. 5: eine prinzipielle Darstellung des Beispieles nach Fig. 3 längs der Linie V-V;
- Fig. 6: ein Beispiel eines Anschlusssystemes für einen Kraftstoffbehälter;
- Fig. 7: eine schematische Anordnung von drei Kraftstoffcontainern in horizontaler Weise mit umgebender Umhausung und angeschlossener oder integrierter Andockstation;
- Fig. 8: eine paketartige Anordnung mehrerer Kraftstoffcontainer, beidseitig zu einer Andockstation;
- Fig. 9: ein bruchstückartiges Beispiel einer Fixierungseinrichtung im Eckbereich eines Kraftstoffcontainers, und
- Fig. 10: ein weiteres Beispiel einer vergleichbaren Fixierungseinrichtung.

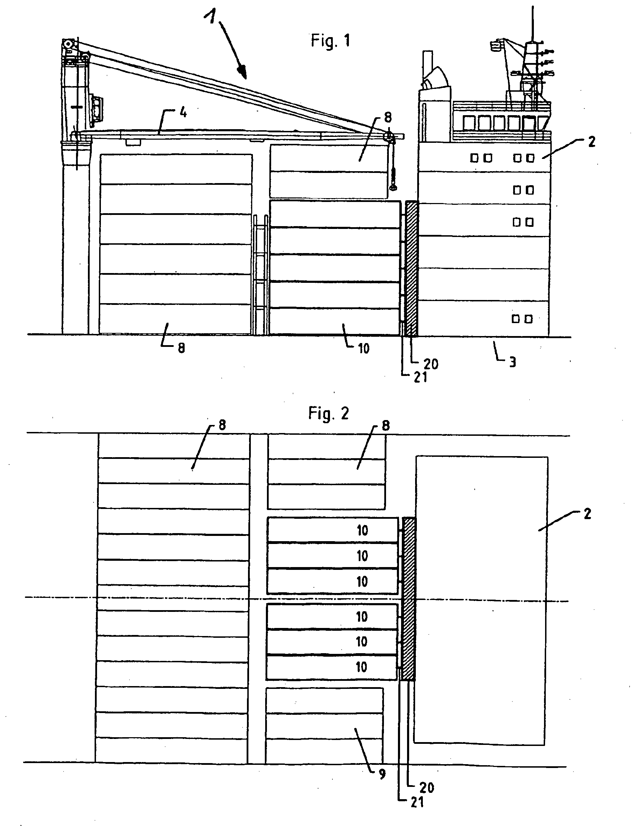

Die schematische Darstellung nach Fig. 1 zeigt einen Teil eines Containerschiffes 1 mit Deckshaus und Brücke sowie dahinter gestapelte Frachtcontainer 8 und Kraftstoffcontainer 10. Dieses Schiff 1 soll einen Dual-Fuel-Antrieb oder Gas-Antrieb als Hauptmaschine und entsprechende Hilfsaggregate haben, die ebenfalls nach dem Dual-Fuel-Prinzip oder Gas-Antrieb ausgelegt sind. Die verwendete Bezeichnung Kraftstoff umfasst auch Brennstoffe und Treibstoffe.

Da die Darstellung in Fig. 1 eine schematische Ansicht aus Steuerbordrichtung oberhalb des Hauptdecks 3 ist, ist der Motorenraum und einige Decks unterhalb der Container 8, 10 nicht dargestellt. Die Kraftstoffcontainer 10 sind in dem gezeigten Beispiel hinter den Schiffsaufbauten 2 in einer gestapelten Anordnung platziert.

Unter Einbeziehung der Fig. 2, die eine Ansicht von oben auf den hier maßgeblichen Bereich eines Schiffes 1 wie nach Fig. 1 darstellt, ist erkennbar, dass die Kraftstoffcontainer 10 paketweise mit 5-facher oder beliebiger Anzahl Stapelung nach oben, und einer Anordnung von 2x3 - oder mehr oder weniger Reihen - in horizontaler Richtung vorgesehen sind.

Backbordseitig sind gemäß Fig. 2 Frachtcontainer 8 mit anderer, hier kürzerer Abmessung, aber einer höheren Stapelung als die Kraftstoffcontainer 10, vorhanden.

Steuerbordseitig sind weitere Ladeplätze 9 für Frachtcontainer vorgesehen. Ebenfalls schließt sich nach achtern in horizontaler und vertikaler Richtung die Stapelung weiterer Frachtcontainer 8 an. Gleichzeitig ist in Fig. 1 erkennbar, dass ein bordeigener Kran 4 vorhanden ist, der einen Be- oder Entladevorgang der Container auch ohne landseitige Hebezeuge oder Containerbrücke ermöglicht.

Die Kraftstoffcontainer 10 sind über Anschlussleitungen 21 mit einer Andockstation 20 verbunden. Diese Andockstation 20 ist im Beispiel nach Figuren 1 und 2 im heckseitigen Bereich der Schiffsaufbauten 2 angeordnet oder kann auch integraler Bestandteil dieser Schiffsaufbauten 2 sein.

Da insbesondere bei schwerer See auf den Schiffsrumpf und die Container-Ladung einwirkende Kräfte Bewegungen und Verschiebungen, wenn auch in geringem Maße, bewirken können, sind die Anschlussleitungen 21 in vorteilhafter Weise flexibel ausgelegt und gegebenenfalls mit Dehnungskompensatoren versehen. Bewegungskräfte zwischen diesen Baugruppen können daher ausgeglichen werden, wodurch die Bruchsicherheit der Anschlussleitungen 21 erheblich verbessert wird.

Die Kraftstoffcontainer 10 werden bevorzugt auf dem Hauptdeck beziehungsweise Wetterdeck gefahren. Die Kraftstoffcontainer 10 können jedoch auch in den sich üblicherweise nach unten anschließenden Laderaum, als offener Laderaum, mit entsprechender Lüftung gestaut und gefahren werden.

Die Anschlussleitungen 21 werden zum Beispiel über abdichtende und/oder selbstverriegelnde Schnellkupplungen sowohl tankseitig wie auch auf Seite der Andockstation 20 angeschlossen. Auch ist vorgesehen, Rohrleitungen in diesem Bereich mit mäanderförmigen Abschnitten auszustatten, so dass Dehnungsbewegungen ausgeglichen werden können. Die Rohrleitungen können einwandig oder zweiwandig ausgelegt sein, wobei bevorzugt Edelstahlrohre eingesetzt werden. Die Lecksicherheit wird speziell mit zweiwandigen Rohren erheblich verbessert. Auch können im Bereich der Anschlusskupplungen und/oder einwandiger Rohre des Weiteren Auffangbehältnisse für Leckflüssigkeiten angeordnet werden. Kraftstoffcontainer 10 mit LNG oder LPG erlauben es daher bei Dual-Fuel-Maschinen den Antrieb und/oder Hilfsaggregate in Gebieten mit strengen Emissionsvorschriften auf Gasbetrieb umzuschalten, und auch Häfen in diesen Gebieten anzulaufen.

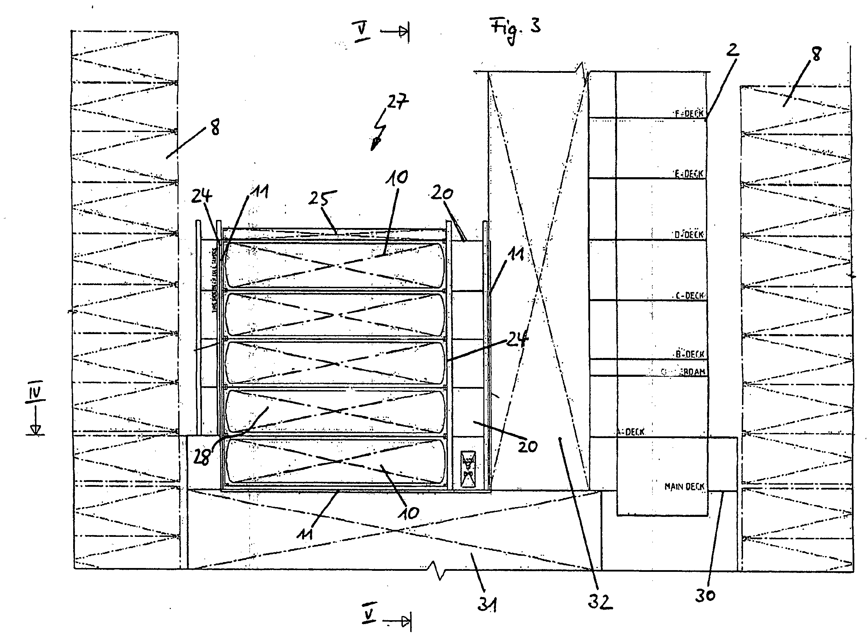

Die Darstellung nach Fig. 3 ist ein ähnlicher Schnitt beziehungsweise eine Ansicht vergleichbar mit Fig. 1. Fig. 3 zeigt jedoch klarer die erfindungsgemäßen Merkmale und den Kernbereich, in dem die Kraftstoffcontainer 10 innerhalb einer geschlossenen Umhausung 11 fixiert gelagert sind.

Schiffsaufbauten 2 sind im rechten Bereich mit Hauptdeck 30 bis F-Deck schematisch dargestellt. In Richtung Bugbereich (rechts) sind Frachtcontainer 8 in unter dem Hauptdeck 30 liegenden Laderaum und darüber gestapelt. Nach achtern schließt sich an die Schiffsaufbauten 2 ein Gehäuse 32, zum Beispiel für Abgasleitungen aus dem darunter schematisch angedeuteten Maschinenraum 31, an.

Im linken Bereich (nach achtern) sind weiter Frachtcontainer 8 vorhanden.

Im Zwischenbereich 27 zwischen vorderem Gehäuse 32 und achterlichen Frachtcontainern 8 sind fünf übereinander gestapelte Kraftstoffcontainer 10 gezeigt. Diese Kraftstoffcontainer 10 stehen über eine sich etwa bis zur gleichen Höhe erstreckende Andockstation 20 mit Bordanschlüssen des Schiffes in Verbindung. Es können hierbei einzelne Kraftstoffcontainer, aber auch alle Kraftstoffcontainer 10, in direkter Verbindung mit der Andockstation 20 stehen.

Der tatsächliche Ladebereich 28 für die Kraftstoffcontainer 10 ist zusammen mit der Andockstation 20 mittels einer weitgehend geschlossenen Umhausung 11 umgeben, die nach oben offen ist. Die Umhausung 11 umfasst daher die Wandbereiche und den Bodenbereich und stellt sicherheitstechnisch sowohl eine Schutzummantelung gegen Brand- und Explosionsgefahren dar, aber auch im Sinne eines Leck-Auffang-Raumes oder -Behältnisses, das im Falle defekter Kraftstoffcontainer 10 oder beschädigter Anschlussleitungen, Flüssigkeiten, auch Flüssiggas, auffangen kann, und diese in Sicherheitszonen ableiten kann. In vergleichbarer Weise kann auch unbeabsichtigt austretendes, gasförmiges LNG, zum Beispiel innerhalb des Gehäuses 32, außerhalb von Gefahrenzonen nach oben abgeleitet werden.

Die Umhausung 11 kann beispielsweise aus geschweißten Stahl- oder Edelstahlplatten bestehen. Dies kann auch doppelwandig als Kofferdamm ausgelegt sein, wobei auch eine zusätzliche Isolation bei Platten, innen und gegebenenfalls außen an der Umhausung 11, vorgesehen werden kann.

Der obere, offene Bereich der Umhausung 11 ist sicherheitstechnisch mit einem Abdeckschutz 25 ausgestattet. Bei dieser Auslegung mit Abdeckschutz 25 ist es gestattet, den Ladebereich 28 der Kraftstoffcontainer 10 auch mit Frachtcontainern 8 oder anderer Fracht, zum Beispiel beim Be- oder Entladevorgang, zu überfahren beziehungsweise Frachtcontainer darüber zu verschwenken.

Die Brand- und Explosionsschutzwände der Umhausung 11 können auch aus anderen Materialien und Verbundstoffen bestehen, die jedoch mindestens der geforderten Brandklasse beispielsweise A60 entsprechen sollen. Das Prinzip kann für eine beliebige Zahl von Kraftstoffcontainern übereinander, nebeneinander und/oder hintereinander verwendet werden.

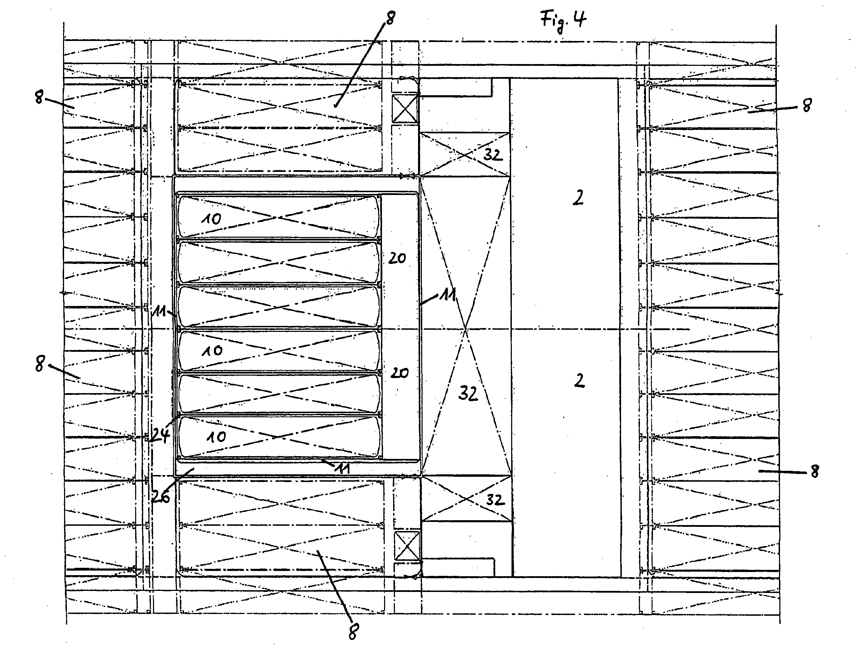

Die Fig. 4 zeigt eine Ansicht längs der Linie IV-IV nach Fig. 3.

Gleiche Bezugzeichen bezeichnen auch gleiche Baugruppen.

Es ist erkennbar, dass innerhalb der Umhausung 11 in horizontaler Richtung sechs Pakete von Kraftstoffcontainern 10 gestapelt sind. Diese grenzen dabei im rechten Bereich an die Andockstation 20. Steuerbord- und backbordseitig sind entsprechend der Fig. 4 weitere Frachtcontainer 8 gestapelt, die somit auch einen ersten Schutz gegen ein Überspülen des Zwischenbereiches 27 bei schwerer See bilden.

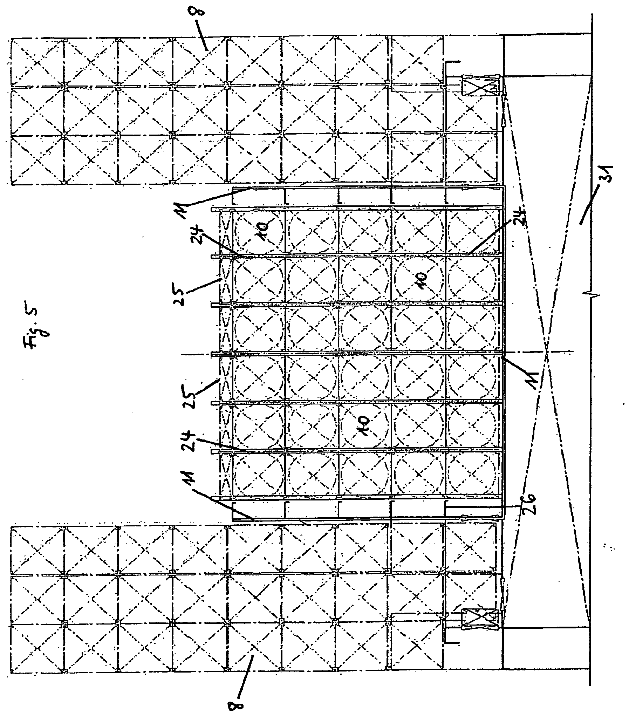

Die Fig. 5 zeigt schematisch eine Ansicht längs der Schnittlinie V-V aus Fig. 3, im Sinne eines Querschnitts durch ein entsprechendes Containerschiff.

Im Boden und im seitlichen Bereich erstreckt sich hierbei die Umhausung 11 als nach oben offener Laderaum für Kraftstoffcontainer 10.

Die Kraftstoffcontainer 10 weisen im Wesentlichen zylindrische Behälterformen auf. Die gegenüber liegenden Stirnseiten haben etwa kalottenförmige Abschlüsse. Dies entspricht bezüglich Volumen und drucktechnisch einer weitgehend optimalen Behälterform. Die Behälter selbst sind in Containerrahmengestellen fixiert, die standardisierte Containerabmessungen haben.

Die Kraftstoffcontainer 10 sind innerhalb der Umhausung 11 im Sinne eines Laderaumes in Zellenführungen 24 gelagert und gestapelt. Diese Zellenführungen 24 oder auch anders gestaltete Positionierungssysteme fixieren daher die gestapelten Kraftstoffcontainer 10 sowohl in horizontaler wie vertikaler Richtung. Vertikal geschieht dies maßgeblich durch das Gewicht der Container, kann aber auch durch, oder zusätzlich durch andere geeignete Maßnahmen erfolgen. Es ist aber auch zusätzlich möglich, weitere Zusatzsicherungen, zum Beispiel mittels passgenauer Arretierzapfen zwischen Zellenführungen 24 und Containergestellt anzubringen.

Der obere, offene Bereich der Umhausung 11 wird aus sicherheitstechnischen Gründen mit einem Abdeckschutz 25 abgesichert. Dieser Abdeckschutz 25 kann relativ flache Behältnisse wie Paletten-Container oder auch simplere Abdeckplatten aufweisen, die zweckmäßigerweise vergleichbar den Kraftstoffcontainern 10 in die Zellenführungen 24 passen. Dies vereinfacht den lademäßigen Zugriff auf Kraftstoffcontainer 10 des jeweiligen Stapels.

Mit 26 sind Inspektionsgänge innerhalb der Umhausung 11 angedeutet, was die Kontrollmöglichkeit der Kraftstoffcontainer verbessert. Solche Kontrollgänge sind erfindungsgemäß nicht zwingend notwendig.

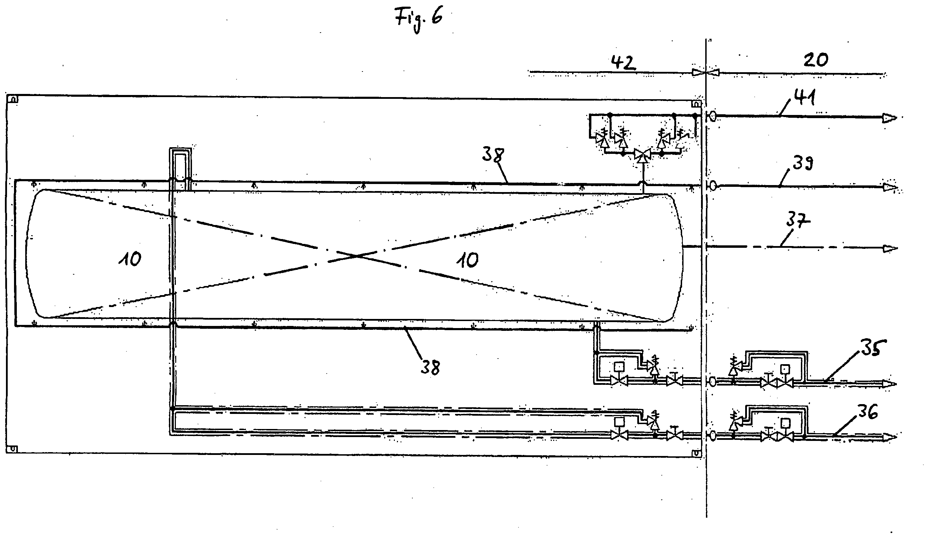

Fig. 6 zeigt eine schematische Darstellung von Verbindungsleitungen zwischen Kraftstoffcontainer 10 und der angrenzenden Andockstation 20.

In der Fig. 6 ist von oben nach unten eine Abblasleitung 41 im Bereich der Andockstation 20 dargestellt, die im Containerbereich 42 über Ventile mit dem tonnenförmigen Behältnis des Kraftstoffcontainers 10 in Verbindung steht.

Des Weiteren ist eine Anschlussleitung 39 für eine Berieselungseinrichtung beziehungsweise Kühleinrichtung 38 vorgesehen, die mindestens auf verschiedenen Seiten des Kraftstoffcontainers angeordnet ist. Über diese Berieselungseinrichtung kann einerseits die Außentemperatur des Behältnisses, etwa durch Aufsprühen von Wasser, in gewünschten Bereichen beeinflusst werden. Die Einrichtung 38 kann jedoch auch zum Beispiel zur Brandbekämpfung durch Ausblasen von Schaumlösungen oder branderstickenden Gasen genutzt werden.

Mit 35 ist eine Verbindungsleitung für Flüssiggas aus dem Behälter 10 gezeigt.

Die Leitungen 36 stellen im Beispiel Ableitungen für im Behältnis 10 des Kraftstoffcontainers entstandene Dämpfe dar.

Die Leitung 37 symbolisiert Mess- und Kontrollleitungen, mittels derer verschiedenste Parameter, wie Temperatur oder Druck, des im Behältnis vorhandenen Mediums, zum Beispiel Flüssiggas oder die Temperatur des Außenbehältnisses an eine Kontrollstation weitergeleitet werden.

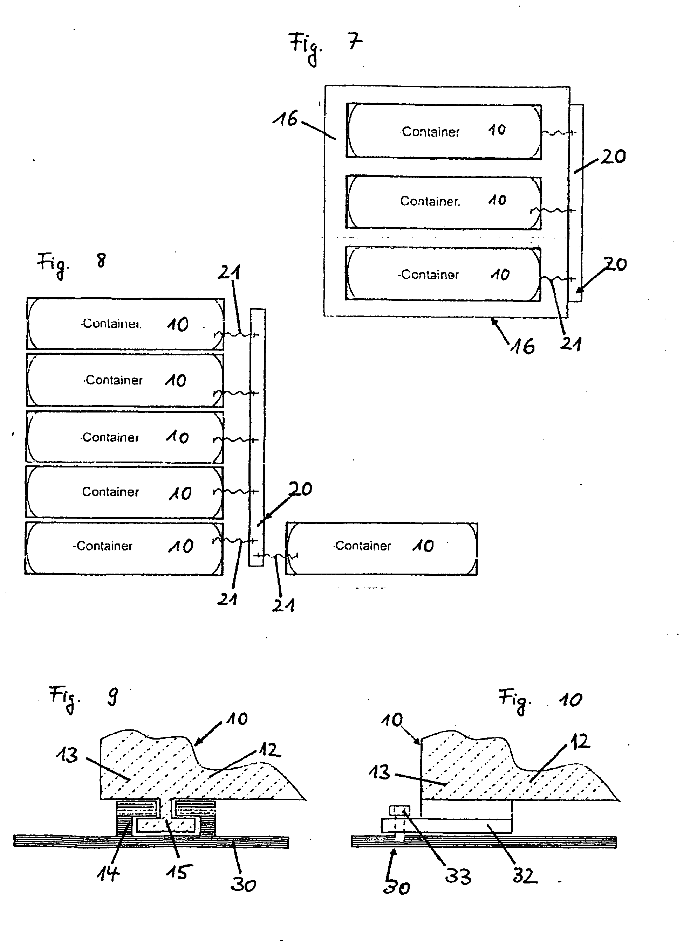

Fig. 7 zeigt schematisch eine horizontale Ansicht von 3 voneinander beabstandeten Kraftstoffcontainern 10, die mit Umschottungen 16 sowohl im Umgang als auch im Zwischenabstand der Kraftstoffcontainer 10 angeordnet sind. Vereinfacht sind auch die Anschlussleitungen 21 und die Andockstation 20 dargestellt. Diese Alternative der Anordnung der Kraftstoffcontainer innerhalb von Kofferdämmen erhöht den Sicherheitsfaktor, insbesondere zu benachbarten Containern oder Räumen. Andererseits können begehbare Kofferdämme auch zur Montage, Wartung und im Betrieb genutzt werden. Der Raumbereich der Umschottung 16 kann als Kofferdamm gestaltet sein und auch durch vergleichbare Feuerschutzwände ersetzt werden, um auf diese Weise auch eine explosionsgeschützte Zone zu schaffen.

In der Darstellung auf Fig. 8 ist schematisch eine beidseitige Anordnung von Kraftstoffcontainern 10 mit der Andockstation 20, die auch Lasch-Brücke genannt werden kann, gezeigt. Obwohl die gezeigte Grundform der Behältnisse der Kraftstoffcontainer ein zylinderförmiges Behältnis mit kalottenförmigem Abschluss auf beiden Stirnseiten ist, können auch mehrere kugelförmige Behältnisse innerhalb eines Gestellrahmens des Kraftstoffcontainers aufgenommen werden und fixiert sein. Des Gleichen können auch sogenannte Bi-Lop-Tanks, im Sinne geteilter Tanks, zur Anwendung kommen, die im Querschnitt aus zwei halbkreisförmigen Tankelementen von 180° oder mehr, bestehen.

Auch kann ein Kraftstoffcontainer mit geschlossener Außenwand ausgelegt sein, um bereits hierdurch einen Druck- und Explosionsschutz zu gewährleisten. Der Kraftstoffcontainer kann auch ganz oder teilweise aus nicht-zylindrischen Elementen bestehen.

Als Alternative zur sicherheitstechnischen Festlegung der Kraftstoffcontainer 10 mit passgenauer Anordnung innerhalb von Zellenführungen, können auch andere starre Verbindungen eingesetzt werden.

Die Figuren 9 und 10 zeigen schematisch derartige Verbindungen.

In Fig. 9 ist ein Eckbereich eines Kraftstoffcontainers 10 mit der Befestigung gegenüber dem Deck 30 dargestellt. Im Eckbereich 13 des Tragrahmens 12 des Containers ist im Beispiel ein umgekehrt T-förmiger Träger 15 vorhanden. Dieser Träger ist in einem etwa komplementär ausgelegten Fixierungsblock beziehungsweise Fixierungsschuh 14 aufgenommen und mittels Verriegelungselementen unter Berücksichtigung üblicher Krafteinwirkungen gegenüber dem Deck 30 fixiert.

Die Alternative nach Fig. 10 zeigt beispielhaft einen Eckbereich 13 eines Containers, wobei eine untere Tragschiene 32 zum Beispiel angeschweißt am Tragrahmen 12 vorgesehen ist. Diese Tragschiene 32 ist mittels eines Verriegelungselementes 33, im Beispiel ein Bolzen, mit dem Deck 30 fest verbunden, so dass die erforderliche Fixierung des Kraftstoffcontainers mit dem Schiff gewährleistet ist.

Insbesondere im Hinblick auf die Möglichkeit einer Nachrüstung des Schiffskörpers oder des Schiffes kann die Umhausung 11 fest verschweißt, verschraubt oder anderweitig mit dem Schwimmkörper verbunden sein.

Es kann aber auch vorteilhaft sein, die Umhausung 11 demontierbar auszuführen, so dass relativ einfach ein Rückbau der Umhausung stattfinden kann. Vorteilhaft ist dies, wenn dieser freiwerdende Bereich auf bestimmten Fahrtrouten für die Aufnahme von Frachtcontainern oder vergleichbarer Ladung eingesetzt werden muss.

Die beschriebenen Möglichkeiten und Beispiele können sowohl bei auf See fahrenden Schiffen als auch auf Binnenschiffen und Wasserfahrzeugen aller Art, einschließlich beliebiger Off-Shore-Einsätze, angewendet werden.

Die Erfindung schafft daher die Möglichkeit, Schwimmkörper und insbesondere Schiffe mit Dual-Fuel-Antrieben im Vergleich zur Nutzung von Schweröl als Kraftstoff, auch emissionsarm, insbesondere mit LNG oder LPG zu betreiben, so dass strengere Emissionsvorschriften beachtet und erfüllt werden können. Sicherheitstechnische Aspekte werden speziell dadurch berücksichtigt, dass der Ladebereich für Kraftstoffcontainer eine geschlossene Umhausung aufweist, die nach oben offen ist, wobei Leitungen von und zu den Kraftstoffcontainern auf kurzem Weg mit einer Andockstation gekoppelt werden können, um Kraftstoff oder Signale an das weitere Bordnetz des Schwimmkörpers abgeben zu können.

Eine weitere grundlegende Idee der Erfindung bei Schiffen mit Dual-Fuel-Antrieben kann auch darin gesehen werden, dass zusätzlich zu stationären im Schiffsrumpf integrierten Kraftstoffbunkern wie Schweröl oder Diesel-Kraftstoff, mobile austauschbare Kraftstoffcontainer für umweltfreundlichen Kraftstoff, wie LNG oder LPG, vorgesehen werden, wobei eine sicherheitstechnische Fixierung der Kraftstoffcontainer mit dem Schiff durchgeführt wird und nur eine kurze Überleitungsstrecke für den Kraftstoff zu einer Andockstation mit Verbindung zum Bordnetz des Schiffes vorgesehen wird.

## Patentansprüche

1. Schwimmkörper (1)
a) mit mindestens einem Kraftstoffcontainer-Ladebereich (28) mit Kraftstoffcontainer (10),
b) wobei der/die Kraftstoffcontainer (10) für Verbrauchskraftstoff wie LNG oder LPG ausgelegt ist/sind,
c) wobei der Kraftstoffcontainer-Ladebereich (28) mindestens nach oben offen ist,
d) wobei eine Andockstation (20) vorgesehen ist, die mit Bordsystemen des Schwimmkörpers (1) verbunden ist und mit dem/den Kraftstoffcontainern (10) zur Abgabe von Verbrauchskraftstoff koppelbar ist,
**dadurch gekennzeichnet**,
e) dass der/die Kraftstoffcontainer (10) mobil vorgesehen ist/sind,
f) dass der Kraftstoffcontainer-Ladebereich (28) eine weitgehend geschlossene Umhausung (11) aufweist,
g) dass die Andockstation (20) in der geschlossenen Umhausung (11) vorgesehen ist und
h) dass die Andockstation (20) zur Abgabe von Verbrauchskraftstoff an schwimmkörper-eigene Aggregate wie Antriebsmotor und/oder Hilfsaggregate ausgelegt ist,
i) wobei die Umhausung einen Leckageschutz gegen eventuell austretendes Flüssiggas darstellt und
ausgelegt ist, mindestens das Erfordernis der Brandklasse A60 zu erreichen.

2. Schwimmkörper nach Anspruch 1,
**dadurch gekennzeichnet,**
**dass** innerhalb der Umhausung (11) Zellenführungen (24) zur Stapelung von Kraftstoffcontainern (10) vorgesehen sind, und
**dass** eine Zusatzsicherung als Abhebesicherung für die Kraftstoffcontainer (10) vorgesehen ist.

3. Schwimmkörper nach einem der Ansprüche 1 bis 2,
**dadurch gekennzeichnet,**
**dass** der oben offene Bereich der Umhausung (11) mindestens oberhalb der Kraftstoffcontainer (10) einen Abdeckschutz (25) aufweist, und
**dass** der Abdeckschutz (25) als flache, obere Abdeckung, insbesondere in den Zellenführungen (24), vorgesehen ist.

4. Schwimmkörper nach einem der Ansprüche 1 bis 3,
**dadurch gekennzeichnet,**
**dass** die geschlossene Umhausung (11) mit Boden und Wänden aus Stahlplatten, mit oder ohne Isolierung, gebildet ist.

5. Schwimmkörper nach einem der Ansprüche 1 bis 4,
**dadurch gekennzeichnet,**
**dass** mehrseitig zur Andockstation (20) Kraftstoffcontainer (10) anordenbar und mit dieser verbindbar sind.

6. Schwimmkörper nach einem der Ansprüche 1 bis 5,
**dadurch gekennzeichnet,**
**dass** die Andockstation (20) für Kraftstoffcontainer (10) freistehend auf Deck (3) vorgesehen ist oder Bestandteil von Schiffsaufbauten (2) auf Deck (3) oder von Schiffswänden unter Deck ist.

7. Schwimmkörper nach einem der Ansprüche 1 bis 6,
**dadurch gekennzeichnet,**
**dass** zwischen Andockstation (20) und Kraftstoffcontainern (10) koppelbare Leitungen (21) vorgesehen sind,
**dass** mindestens die Leitungen (35, 36) für Verbrauchskraftstoff, Flüssigkeit oder Dämpfe als flexible Schläuche oder Rohre mit Dehnungskompensatoren ausgelegt sind.

8. Schwimmkörper nach einem der Ansprüche 1 bis 7,
**dadurch gekennzeichnet,**
**dass** die Umhausung (11) mindestens für Flüssigkeiten leckdicht ausgebildet ist, und
**dass** das Material der Umhausung (11) mindestens dem Erfordernis der Brandklasse A60 genügt.

9. Schwimmkörper nach einem der Ansprüche 1 bis 8,
**dadurch gekennzeichnet,**
**dass** die Umhausung (11) bei tiefer gelegtem Ladebereich (28) der Kraftstoffcontainer (10) kofferdammartig (16) ausgebildet ist.

10. Schwimmkörper nach einem der Ansprüche 1 bis 9,
**dadurch gekennzeichnet,**
**dass** die geschlossene Umhausung (11) fest verschweißt, verschraubt oder anderweitig mit dem Schwimmkörper (1) verbunden ist.

11. Schwimmkörper nach einem der Ansprüche 1 bis 10,
**dadurch gekennzeichnet,**
**dass** die geschlossene Umhausung (11) demontierbar ausgeführt ist.

12. Schwimmkörper nach einem derAnsprüche 1 bis 11,
**dadurch gekennzeichnet,**
**dass** die Kraftstoffcontainer (10) Behältnisse aufweisen, die innerhalb von Gestellen oder anderen Positionierungssystemen mit standardisierten Containerabmessungen vorgesehen sind.

13. Schwimmkörper nach einem der Ansprüche 1 bis 12,
**dadurch gekennzeichnet,**
**dass** Kühleinrichtungen den Kraftstoffcontainern (10) zugeordnet sind.

14. Schwimmkörper nach Anspruch 13,
**dadurch gekennzeichnet,**
**dass** die Kühleinrichtungen als Berieselungseinrichtungen (38) ausgebildet sind.

15. Schwimmkörper nach einem der Ansprüche 1 bis 14,
**dadurch gekennzeichnet,**
**dass** er als Wasserfahrzeug, Schiff oder Containerschiff ausgebildet ist.

## Claims

1. Buoyant body (1),
a) having at least one fuel container loading area (28) with fuel container (10),
b) wherein the fuel container(s) (10) is / are designed for consumer fuel such as LNG or LPG,
c) wherein the fuel container loading area (28) is at least upwardly open,
d) wherein a docking station (20) is provided which is connected to the on-board systems of the buoyant body (1) and can be coupled to the fuel container(s) (10) to discharge consumer fuel,
**characterised in that**
e) the fuel container(s) (10) is / are provided to be mobile,
f) the fuel container loading area (28) has an extensively closed surrounding housing (11),
g) the docking station (20) is provided in the closed surrounding housing (11), and
h) the docking station (20) is designed to discharge consumer fuel to components of the buoyant body such as drive motors and / or auxiliary power units,
i) wherein the surrounding housing constitutes a leakage protection against possibly escaping liquid gas and
is designed to fulfill at least the requirement of the fire protection class A60.

2. Buoyant body according to claim 1,
**characterised in that**
cell guides (24) for stacking fuel containers (10) are provided within the surrounding housing (11), and
additional security is provided as anti-lift protection for the fuel containers (10).

3. Buoyant body according to one of the claims 1 to 2,
**characterised in that**
the upwardly open area of the surrounding housing (11) has a protective cover (25) at least above the fuel containers (10), and
the protective cover (25) is provided as a flat, upper cover, in particular in the cell guides (24).

4. Buoyant body according to one of the claims 1 to 3,
**characterised in that**
the closed surrounding housing (11) is formed with bottom and walls made of steel plates with or without insulation.

5. Buoyant body according to one of the claims 1 to 4,
**characterised in that**
fuel containers (10) can be arranged on multiple sides of the docking station (20) and can be connected thereto.

6. Buoyant body according to one of the claims 1 to 5,
**characterised in that**
the docking station (20) for fuel containers (10) is provided so as to be free-standing on deck (3) or is a part of ship structures (2) on deck (3) or ship walls below deck.

7. Buoyant body according to one of the claims 1 to 6,
**characterised in that**
lines (21) which can be coupled are provided between the docking station (20) and fuel containers (10),
at least the lines (35, 36) for fuel, liquid or vapours are designed as flexible hoses or pipes with expansion compensators.

8. Buoyant body according to one of the claims 1 to 7,
**characterised in that**
the surrounding housing (11) is designed to be leak-proof at least for liquids, and
the material of the surrounding housing (11) satisfies at least the requirement according to fire protection class A60.

9. Buoyant body according to one of the claims 1 to 8,
**characterised in that**
the surrounding housing (11) is formed in the manner of a coffer dam (16) when the loading area (28) of the fuel containers (10) is arranged at a depth.

10. Buoyant body according to one of the claims 1 to 9,
**characterised in that**
the closed surrounding housing (11) is fixedly welded, screwed or otherwise connected to the buoyant body (1).

11. Buoyant body according to one of the claims 1 to 10,
**characterised in that**
the closed surrounding housing (11) is designed to be detachable.

12. Buoyant body according to one of the claims 1 to 11,
**characterised in that**
the fuel containers (10) have receptacles which are provided within frameworks or other positioning systems with standardised container dimensions.

13. Buoyant body according to one of the claims 1 to 12,
**characterised in that**
cooling means are assigned to the fuel containers (10).

14. Buoyant body according to claim 13,
**characterised in that**
the cooling means are designed as sprinkler units (38).

15. Buoyant body according to one of the claims 1 to 14,
**characterised in that**
it is formed as a water vehicle, ship or container ship.

## Revendications

1. Corps flottant (1) :
a) avec au moins une zone de chargement de conteneurs de carburant (28) comportant des conteneurs de carburant (10),
b) dans lequel le(les) conteneur(s) de carburant (10) est(sont) conçu(s) pour un carburant de fonctionnement tel que du gaz naturel liquéfié ou du gaz de pétrole liquéfié,
c) dans lequel la zone de chargement de conteneurs de carburant (28) est ouverte au moins vers le haut,
d) dans lequel une station d'arrimage (20) est prévue, qui est reliée aux systèmes embarqués du corps flottant (1) et qui peut être couplée au(x) conteneur(s) de carburant (10) pour l'approvisionnement en carburant de fonctionnement,
caractérisé :
e) en ce que le(les) conteneur(s) de carburant (10) est(sont) prévu(s) pour être mobile(s),
f) en ce que la zone de chargement de conteneurs de carburant (28) comprend une enceinte (11) pratiquement fermée,
g) en ce que la station d'arrimage (20) est prévue dans l'enceinte (11) pratiquement fermée, et
h) en ce que la station d'arrimage (20) est conçue pour l'approvisionnement en carburant de fonctionnement de groupes propres au corps flottant tels que moteur d'entraînement et/ou unités auxiliaires,
i) l'enceinte formant une protection contre les fuites pour du gaz liquide s'échappant éventuellement et
étant conçue pour satisfaire au moins l'exigence de la classe de feu A60.

2. Corps flottant selon la revendication 1,
**caractérisé :**
**en ce qu'**à l'intérieur de l'enceinte (11), des éléments de guidage cellulaires (24) sont prévus pour l'empilement des conteneurs de carburant (10), et
**en ce qu'**un dispositif de sécurité complémentaire est prévu à titre de sécurité anti-soulèvement pour les conteneurs de carburant (10).

3. Corps flottant selon une des revendications 1 à 2,
**caractérisé :**
**en ce que** la zone de l'enceinte (11) qui est ouverte vers le haut comprend au moins un couvercle de protection (25) au-dessus des conteneurs de carburant (10), et
**en ce que** le couvercle de protection (25) est prévu en tant que couvercle supérieur plat, en particulier au niveau des éléments de guidage cellulaires (24).

4. Corps flottant selon une des revendications 1 à 3,
**caractérisé :**
**en ce que** l'enceinte (11) fermée est constituée d'un fond et de parois en tôles d'acier, avec ou sans isolation.

5. Corps flottant selon une des revendications 1 à 4,
**caractérisé :**
**en ce que** les conteneurs de carburant (10) peuvent être mis en place par plusieurs côtés au niveau de la station d'arrimage (20) et peuvent être reliés à celle-ci.

6. Corps flottant selon une des revendications 1 à 5,
**caractérisé :**
**en ce que** la station d'arrimage (20) pour les conteneurs de carburant (10) est prévue comme étant isolée sur le pont (3) ou bien en tant que partie intégrante de superstructures de navires (2), sur le pont (3), ou de cloisons de navire, sous le pont.

7. Corps flottant selon une des revendications 1 à 6,
**caractérisé :**
**en ce que** des lignes de couplage (21) sont prévues entre la station d'arrimage (20) et les conteneurs de carburant (10), et
**en ce qu'**au moins les lignes de couplage (35, 36) sont conçues pour des carburants de fonctionnement, des liquides ou des vapeurs, en tant que tuyaux ou tubes flexibles, avec des compensateurs d'allongement.

8. Corps flottant selon une des revendications 1 à 7,
**caractérisé :**
**en ce que** l'enceinte (11) est constituée en étant étanche par rapport à des liquides, et
**en ce que** le matériau de l'enceinte (11) satisfait au moins à l'exigence de la norme d'incendie A60.

9. Corps flottant selon une des revendications 1 à 8,
**caractérisé :**
**en ce que**, dans le cas d'une zone de chargement (28) des conteneurs de carburant (10) plus basse, l'enceinte (11) est formée à la manière d'un coffre ayant des rebords (16).

10. Corps flottant selon une des revendications 1 à 9,
**caractérisé :**
**en ce que** l'enceinte fermée (11) est solidement soudée, vissée ou fixée de toute autre manière au corps flottant (1).

11. Corps flottant selon une des revendications 1 à 10,
**caractérisé :**
**en ce que** l'enceinte fermée (11) est réalisée de manière à être démontable.

12. Corps flottant selon une des revendications 1 à 11,
**caractérisé :**
**en ce que** les conteneurs de carburant (10) comprennent des éléments de réception qui sont prévus à l'intérieur de châssis de support ou autres systèmes de positionnement avec des dimensions de conteneur standardisées.

13. Corps flottant selon une des revendications 1 à 12,
**caractérisé :**
**en ce que** des dispositifs de refroidissement sont associés aux conteneurs de carburant (10).

14. Corps flottant selon la revendication 13,
**caractérisé :**
**en ce que** les dispositifs de refroidissement sont constitués sous la forme de dispositifs d'arrosage (38).

15. Corps flottant selon une des revendications 1 à 14,
**caractérisé :**
**en ce qu'**il est constitué sous la forme d'un navire, d'un bateau ou d'un porte-conteneurs.
